# EUROPEAN PATENT SPECIFICATION

(11) **EP 4 535 752 B1**
(45) Date of publication and mention of the grant of the patent: **11.11.2026**
(21) Application number: 24202189.7
(22) Date of filing: 24.09.2024
(51) Int. Cl.: H04L 47/10, H04L 47/28

(54) **METHOD AND APPARATUS FOR PROCESSING DATA IN TIME-SENSITIVE NETWORK, DEVICE AND MEDIUM**
VERFAHREN UND VORRICHTUNG ZUR VERARBEITUNG VON DATEN IN EINEM ZEITEMPFINDLICHEN NETZWERK, VORRICHTUNG UND MEDIUM
PROCÉDÉ ET APPAREIL DE TRAITEMENT DE DONNÉES DANS UN RÉSEAU SENSIBLE AU TEMPS, DISPOSITIF ET SUPPORT

(30) Priority: 07.10.2023 CN 202311295206
(43) Date of publication of application: 09.04.2025
(73) Proprietor: AUMOVIO Germany GmbH, 60488 Frankfurt am Main (DE)
(72) Inventor: Yang, Xianhui, Chongqing, 401133 (CN); Luo, Xianfang, Chongqing, 401133 (CN); Lei, Xuexue, Shanghai, 200082 (CN)
(74) Representative: Aumovio Corporation

(56) References cited:
- US-A1- 2022 046 567
- RENÉ HUMMEN ET AL: "TSN - Time Sensitive Networking", HIRSCHMANN WHITE PAPER, 31 December 2016 (2016-12-31), pages 1 - 12, XP055593423, Retrieved from the Internet <URL:http://www.hit.bme.hu/~jakab/edu/litr/TimeSensNet/TSN-Time-Sensitive-Networking-White-Paper.pdf> [retrieved on 20190603]
- SANTOS AELLISON CASSIMIRO T DOS ET AL: "TSNSCHED: Automated Schedule Generation for Time Sensitive Networking", 2019 FORMAL METHODS IN COMPUTER AIDED DESIGN (FMCAD), FMCAD INC, 22 October 2019 (2019-10-22), pages 69 - 77, XP033649550, DOI: 10.23919/FMCAD.2019.8894249

## Description

### Technical Field

The present invention relates to the technical field of network communication, in particular to a method and apparatus for processing data in a TSN (time-sensitive network), a device and a medium.

### Background Art

In the field of motor vehicles, applications such as advanced driver assistance, on-board audio synchronization and the Internet of Vehicles have high requirements in terms of latency; it is necessary to ensure low latency and deterministic latency in data transmission. A TSN (time-sensitive network) can effectively satisfy the latency requirements for time-sensitive data in on-board networks, ensuring the low-latency requirement for time-sensitive data to a certain extent. However, currently, TSN gate control lists are deployed in a switch after offline static computation, ignoring nondeterministic latency caused by network card processing of the sending end in the network, link transmission and switch grouping, etc.; aging of transmission equipment may even cause a change in latency in data packet transmission. Thus, existing networks cannot guarantee deterministic latency in the transmission of time-sensitive data.

Document US 2022/046567 A1 relates to a method and apparatus that may include receiving, by a radio access network (RAN), at least one burst arrival time (BAT) parameter from at least one session management function (SMF). The method may further include determining, by the RAN, if at least one actual BAT is offset from the at least one received BAT parameter by at least one threshold. The method may further include setting, by the RAN, at least one BAT correction parameter based upon at least one offset time. The method may further include calculating, by the RAN, at least one new BAT parameter according to the one BAT correction parameter. The method may further include adjusting, by the RAN, at least one burst schedule based upon one or more of the at least one BAT correction parameter or the at least one new BAT parameter.

### Summary of the Invention

In view of the above, embodiments of the present invention provide a method and apparatus for processing data in a time-sensitive network, and a medium which enables data to have deterministic latency.

A method for processing data in a time-sensitive network according to embodiments of the present invention, the data being time-sensitive data, comprises: acquiring a first time, a second time and a third time; determining whether the data enters a sending queue abnormally by determining whether the data entered at a time that causes it to be scheduled outside its designated gate control operation and based on the first time, the second time and the third time acquired; if the data is determined to have entered the sending queue abnormally, telling a sender of the data to adjust a sending time, wherein the first time is a time when the data is actually scheduled for transmission, the second time is a time when the gate control operation of the data is planned to begin, and the third time is a duration of the gate control operation of the data.

When the difference between the first time and the second time is greater than the third time, or when the difference between the first time and the second time is less than 0, the data enters a sending queue abnormally.

The sender of the data is told to adjust the sending time on the basis of a delay value of the data, wherein the delay value is computed on the basis of the first time and a fourth time, the fourth time being a time when the data is planned to be scheduled.

A delay value of data is computed multiple times, and a smoothing algorithm is used to subject multiple computed delay values to smoothing, so as to obtain a final delay value, and the sender is told to adjust the sending time on the basis of the final delay value.

The method further comprises: identifying whether the data is time-sensitive data, and upon identifying that the data is time-sensitive data, putting the data into a sending queue having the highest priority.

The method further comprises: identifying whether an abnormal flow processing function is activated, and when it is activated, performing the step of identifying whether the data enters a sending queue abnormally.

A value of a function register is used to indicate activation or deactivation of the abnormal flow processing function.

A method for processing data in a time-sensitive network comprises the following steps: receiving at least one item of data; allocating the at least one item of data to multiple sending queues on the basis of a characteristic of the at least one item of data, wherein time-sensitive data is allocated to a sending queue having the highest priority; scheduling data in the multiple sending queues on the basis of a preset gate control list; when scheduling the time-sensitive data, monitoring whether the time-sensitive data enters the sending queue having the highest priority normally; and upon detecting that the time-sensitive data enters the sending queue having the highest priority abnormally, performing an adjustment operation, so that the time-sensitive data is able to enter the sending queue having the highest priority normally.

When the time-sensitive data enters a sending queue early or late and is not scheduled within a specified gate control time, the time-sensitive data is considered to enter a sending queue abnormally.

An apparatus for processing data in a time-sensitive network according to embodiments of the present invention, the data being time-sensitive data, comprises: an acquisition module, for acquiring a first time, a second time and a third time; an identification module, for identifying whether the data enters a sending queue abnormally on the basis of the first time, the second time and the third time acquired by the acquisition module; and a notification module, for telling a sender of the data to adjust a sending time when the identification module identifies that the data enters a sending queue abnormally, wherein the first time is a time when the data is actually scheduled, the second time is a time when a gate control operation of the data is planned to begin, and the third time is a duration of a gate control operation of the data.

A switch comprises: a receiving port, for receiving data and allocating the data to multiple sending queues, wherein, when the data is time-sensitive data, the data is allocated to a sending queue having the highest priority; a gate control assembly, comprising multiple gate control elements, respectively corresponding to the multiple sending queues; and a processing module, for controlling the on/off switching of each gate control element in the gate control assembly on the basis of a gate control list, and thereby scheduling data in the multiple queues, wherein the processing module is further used for: for the sending queue having the highest priority, monitoring whether data therein enters the sending queue abnormally; and upon detecting that data enters the sending queue abnormally, telling a sender to adjust a sending time.

The action of monitoring whether data enters a sending queue abnormally is performed on the basis of a first time, a second time and a third time, wherein the first time is a time when the data is actually scheduled, the second time is a time when a gate control operation of the data is planned to begin, and the third time is a duration of a gate control operation of the data.

An electronic device comprises: a processor; and a memory, for storing an executable instruction of the processor, wherein the processor is configured to execute the executable instruction to implement the processing method according to embodiments of the present invention.

A computer-readable storage medium according to embodiments of the present invention has a computer program stored thereon, the computer program comprising an executable instruction, wherein, when the executable instruction is executed by a processor, the processing method according to embodiments of the present invention is implemented.

### Beneficial effects of embodiments of the present invention:

In embodiments of the present invention, by identifying whether a time-sensitive data stream enters a sending queue abnormally, and telling a sender to adjust a sending time when a sending queue is entered abnormally, the time-sensitive data stream is enabled to enter a sending queue normally, i.e. enabled to have deterministic latency.

### Brief Description of the Drawings

Other details and advantages of the present invention will become obvious through the detailed description provided below. It should be understood that the drawings listed below are merely schematic and therefore should not be regarded as limiting the present invention, and a detailed description is given below with reference to the drawings, wherein:
Fig. 1 is a time sequence diagram for data in a TSN.
Fig. 2 is a schematic flow chart of an embodiment of the method for processing data according to the present invention.
Fig. 3 is a schematic flow chart of another embodiment of the method for processing data according to the present invention.
Fig. 4 is a structural schematic drawing of an embodiment of the apparatus for processing data according to the present invention.
Fig. 5 is a structural schematic drawing of an embodiment of the switch according to the present invention.
Fig. 6 is a structural schematic drawing of an embodiment of the electronic device according to the present invention.

### Detailed Description of the Invention

To clarify the technical problem to be solved by the present invention as well as the technical solution and beneficial effects thereof, the present invention is explained in further detail below with reference to the drawings and embodiments. It should be understood that the particular embodiments described here merely explain the present invention and are not intended to limit it.

In the description of the present invention, it should be understood that the terms "first" and "second" are merely used for descriptive purposes, and must not be interpreted as indicating or implying relative importance or implicitly specifying the quantity of the technical feature indicated. Thus, a feature for which "first" and "second" are defined may explicitly or implicitly include one or more of the feature. Moreover, the terms "first" and "second", etc. are suitable for distinguishing between similar objects, and need not be used to describe a specific order or sequence. It should be understood that terms used in this way may be interchanged in suitable circumstances, to enable an embodiment of the present invention described herein to be implemented in a different order from those shown or described herein.

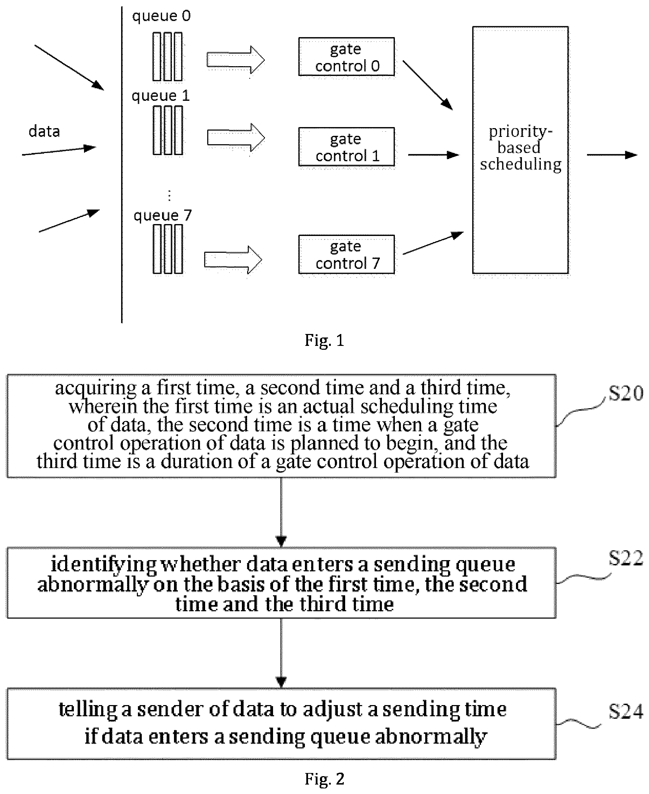

Fig. 1 shows a time sequence diagram for data processing in a TSN (time-sensitive network). As shown in the figure, once data has entered, the data is allocated to different sending queues (abbreviated as "queues"), based on whether the data is time-sensitive. Characteristics such as source MAC address, destination MAC address and VLAN ID (Virtual Local Area Network Identity Document) in the data are used to identify whether the data is time-sensitive. There may be 8 queues, which may be respectively labelled as queue 0 to queue 7, and the priorities of queue 0 to queue 7 increase sequentially, i.e. queue 7 has the highest priority. When data is identified as being time-sensitive, it is allocated to queue 7. As shown in the figure, queues 0 to 7 respectively correspond to gate control 0 to gate control 7, and gate controls 0 to 7 are controlled to control the onward transmission of data in queues 0 to 7. The gate controls are similar to switches, being opened or closed to control whether data in the corresponding queues can be transmitted onward. The switching logic of gate control 0 to gate control 7, and the duration of opening or closing, are controlled by a gate control list, which may be statically configured in advance. For example, one example of a gate control list is shown in Table 1 below.

**Table 1**

| Gate operation number | Gate state | Gate state duration |
|---|---|---|
| 1 | 11001010 | 50 |
| 2 | XXXXXXXX | XXX |
| 3 | XXXXXXXX | XXX |
| 4 | XXXXXXXX | XXX |
| 5 | XXXXXXXX | XXX |
| 6 | XXXXXXXX | XXX |
| ...... | ...... | ...... |
| 16 | 00101010 | 100 |

In Table 1, the content of the gate control list comprises: gate operation number, gate state and gate state duration. During execution, gate operations corresponding to the gate operation numbers are executed periodically in order of increasing gate operation number, e.g. each gate control is controlled on the basis of gate state and duration. Each bit in the gate state corresponds to the state of one gate control, e.g. in the gate state "11001010", "0" signifies that the gate control is closed, and "1" signifies that "the gate control is open", so this gate state means that gate controls 0, 2, 4 and 5 are closed, and gate controls 1, 3, 6 and 7 are open. The gate state duration signifies how long the current gate state will last; when the gate state times out, a switch will take place to the next gate operation number, to execute the corresponding gate operation.

As shown in Fig. 1, there are cases where multiple gate controls are opened simultaneously among gate control 0 to gate control 7, i.e. there are cases where data from different queues are transmitted onward simultaneously; at this time, these data will be scheduled according to the priorities of queues 0 to 7, i.e. data with higher priority will be scheduled first. Thus, since time-sensitive data is always allocated to the queue having the highest priority, time-sensitive data can always be scheduled with the highest priority, so that the time-sensitive data can have a low latency characteristic.

In the above solution, when time-sensitive data does not enter a sending queue according to an agreed time, this may result in delay jitter in the time-sensitive data, encroaching on a transmission window for non-time-sensitive data. In a communication network (such as an on-board network), if such a situation is not dealt with promptly and allowed to accumulate in the entire transmission link, it might have a serious impact on a service.

Thus, embodiments of the present invention provide a solution for processing data in a time-sensitive network, to monitor whether time-sensitive data enters a queue normally, and instruct adjustment of a moment of sending by a sender upon detecting that time-sensitive data enters a queue abnormally, to enable the time-sensitive data to enter a queue normally. This ensures that time-sensitive data has deterministic latency while also ensuring that time-sensitive data has low latency.

Fig. 2 shows a schematic flow chart of an embodiment of the method for processing data in a time-sensitive network according to the present invention. The method specifically comprises the following steps:
step S20, acquiring a first time, a second time and a third time.

The first time is the time when data is actually scheduled, and may be obtained by monitoring. The second time is the time when a gate control operation of data is planned to begin. The third time is the duration of the gate control operation of data, and may be obtained on the basis of a gate control list.

Here, the data is time-sensitive data; a characteristic of the data itself, such as a source MAC address or destination MAC address of the data, may be used to identify whether the data is time-sensitive data. Furthermore, referring to the description of Fig. 1, time-sensitive data is allocated to the queue having the highest priority. In other words, the data referred to in this embodiment may also mean data in the queue having the highest priority; in this embodiment, data in the queue having the highest priority may be monitored directly, in order to acquire the first time, the second time and the third time.

Step S22, identifying whether data enters a sending queue abnormally on the basis of the first time, the second time and the third time acquired in step S20.

Scenarios in which data enters a sending queue abnormally include: data arrives late, and is not scheduled within a planned gate control time (e.g. a planned gate control window), or data arrives early, and is not scheduled within a planned gate control time. For example, if data is scheduled in the previous window or data is scheduled in the next window, this may be considered a scenario in which data enters a sending queue abnormally.

In one embodiment, the action of identifying whether data enters a sending queue abnormally is performed on the basis of the following relationship among the first time, the second time and the third time:
Firstly, T_{actual} is used to denote the first time, i.e. the time when (time-sensitive) data is actually scheduled. T_{gatestart} is used to denote the second time, i.e. the time when a gate control operation of data is planned to begin. Tᵢₙₜₑᵣᵥₐₗ is used to denote the third time, i.e. the duration of the gate control operation of data. In addition, Tₚₗₐₙ is used to denote a fourth time, which is the time when data is planned to be scheduled.

On this basis,
1) If T_{actual} - T_{gatestart} > Tᵢₙₜₑᵣᵥₐₗ, this signifies that the transmission of data is delayed until the next gate control operation, so it can be considered that the data arrives late and is not scheduled at its designated gate control operation time; this is classed as entering a sending queue abnormally.
2) If 0 <= T_{actual} - T_{gatestart} <= Tᵢₙₜₑᵣᵥₐₗ, this signifies that data is transmitted in a planned gate control operation, including: a scenario in which data, despite arriving early or late, is still scheduled within a planned gate control operation time. This will not give rise to delay jitter, and may be considered a normal situation, i.e. data enters a sending queue normally. In addition, when T_{actual} - T_{gatestart} = Tᵢₙₜₑᵣᵥₐₗ, it can be ensured that data is transmitted in the present gate control operation, because there is a protective bandwidth after the end of each gate control operation, and complete transmission of data can be ensured.
3) If T_{actual} - T_{gatestart} < 0, this signifies that data was transmitted early in the previous gate control operation, so it can be judged that the time-sensitive data arrived early and was not scheduled within its designated gate control operation time; this is classed as entering a sending queue abnormally.

Step S24, if data enters a sending queue abnormally, telling a data sender to adjust a sending time.

The objective of adjusting the sending time of the sender is to enable subsequent data to enter a sending queue normally. Step S24 may comprise telling the data sender to increase or decrease the sending time. In addition, in some embodiments, step S24 may comprise computing a data delay value, and feeding the delay value back to the sender, so as to instruct the sender to adjust the sending time precisely on the basis of the delay value. The delay value may be computed in the following manner:

A delay difference (i.e. delay value) may be computed on the basis of T_{actual} - Tₚₗₐₙ. In addition, to avoid delay jitter caused by accidental abnormality of a network, multiple delay values may be gathered statistically and subjected to smoothing (e.g. averaging) by using a smoothing algorithm, so as to obtain T_{final}. T_{final} is then synchronized to the sender. For the next sending operation, the sender adjusts the sending time to Tₜᵣₐₙₛₘᵢₜ - T_{final}, so as to ensure that time-sensitive data enters a sending queue normally. Tₜᵣₐₙₛₘᵢₜ is a sending time originally planned by the sender.

In this embodiment, by monitoring time-sensitive data and promptly adjusting the sending time of the sender upon detecting that data enters a sending queue abnormally, the determinism of the latency of time-sensitive data can be increased.

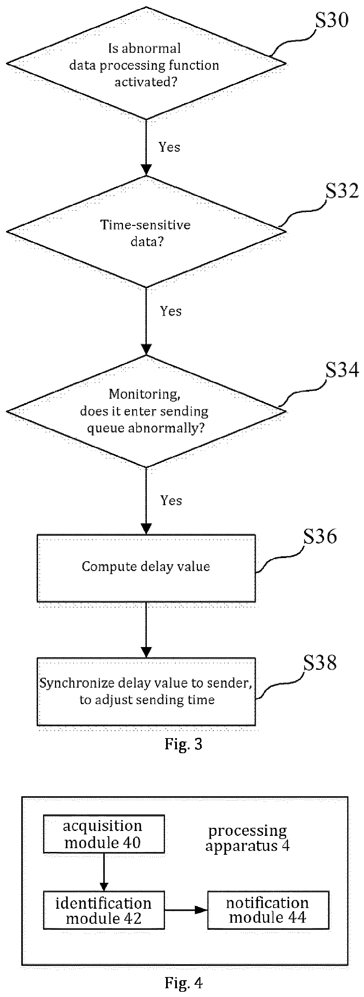

Fig. 3 shows a schematic flow chart of another embodiment of the method for processing data in a time-sensitive network according to the present invention. Part of the procedure of this method overlaps with the procedure of the method in Fig. 2, so the overlapping part is not described in detail again. As shown in Fig. 3, the procedure of this method comprises:
Step S30, judging whether an abnormal data processing function is activated. If so, perform step S32, otherwise return to step S30.
Step S32, judging whether data is time-sensitive data. If so, perform step S34.
Step S34, monitoring the time-sensitive data to detect whether it enters a sending queue abnormally. If so, perform step S36.
Step S36, computing a delay value.
Step S38, synchronizing the delay value to a sender, so as to adjust a sending time.

In this embodiment, an abnormal data processing function indicator bit may be set in a function register, and the value of this indicator bit may be used to indicate whether to activate the abnormal data processing function mentioned in embodiments of the present invention. In general, in an initial stage after enabling a device, since conditions are favorable for the device in all respects, this function need not be activated, to avoid increasing the device load and link load. When the device has been operating for a period of time, the function may be activated periodically, to repair the indeter-minism of latency of the network. After performing repair, the function may be deactivated. The activation or deactivation of the function may be set by means of a diagnostic instrument.

Fig. 4 shows a structural schematic drawing of an embodiment of an apparatus 4 for processing data in a time-sensitive network according to the present invention. The data in this embodiment is time-sensitive data. The processing apparatus 6 comprises: an acquisition module 40, for acquiring a first time, a second time and a third time, wherein the first time is an actual scheduling time of data, the second time is the time when a gate control operation of data is planned to begin, and the third time is the duration of the gate control operation of data; an identification module 42, for identifying whether the data is a stream entering a sending queue abnormally on the basis of the first time, the second time and the third time; and a notification module 44, for telling a sender of the data to adjust a sending time if the data is a stream entering the sending queue abnormally.

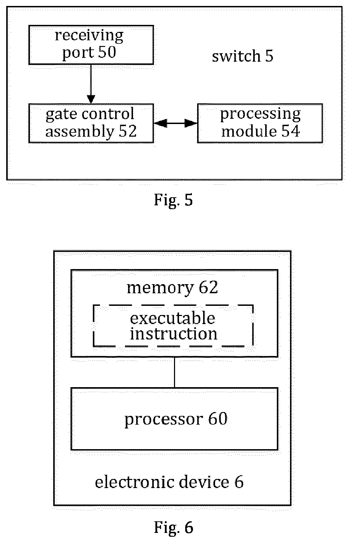

Fig. 5 shows a structural schematic drawing of an embodiment of a switch 5 according to the present invention. The switch 5 comprises a receiving port 50, for receiving data and allocating the data to multiple queues, wherein, when the data is time-sensitive data, the data is allocated to a queue having the highest priority; a gate control assembly 52, comprising multiple gate control elements respectively corresponding to different queues; and a processing module 54, for controlling the on/off switching of each gate control element in the gate control assembly on the basis of a gate control list, so as to schedule data in each of the queues, wherein the processing module 54 is further used for: for first data in the queue having the highest priority, monitoring whether the first data enters a queue abnormally on the basis of a first time, a second time and a third time; and upon detecting that the first data enters a queue abnormally, telling a sender of the time-sensitive data to adjust a sending time, wherein the first time is an actual scheduling time of the first data, the second time is the time when a gate control operation of the first data is planned to begin, and the third time is the duration of the gate control operation of the first data.

Fig. 6 shows a schematic structural drawing of an embodiment of an electronic device 6 of the present invention. The electronic device 6 comprises: a processor 60; and a memory 62, for storing executable instructions of the processor, wherein the processor is configured to execute the executable instructions to implement the method according to embodiments of the present invention.

Furthermore, embodiments of the present invention also provide a computer-readable storage medium having a computer program stored thereon, the computer program comprising executable instructions, wherein, when the executable instructions are executed by a processor, the method according to embodiments of the present invention is implemented.

The description of the storage medium and device embodiments above is similar to the description of the method embodiments above, and has beneficial effects similar to those of the method embodiments. For an understanding of technical details not disclosed in the storage medium and device embodiments of the present application, please refer to the description of the method embodiments of the present application.

The processor may be at least one of an application-specific integrated circuit (ASIC), a digital signal processor (DSP), a digital signal processing device (DSPD), a programmable logic device (PLD), a field programmable gate array (FPGA), a central processing unit (CPU), a controller, a microcontroller and a microprocessor, etc. It will be understood that other electronic devices could also realize the abovementioned processor functions, and embodiments of the present application do not impose specific limitations.

The computer storage medium/memory may be read-only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical discs or compact disc read-only memory (CD-ROM), etc.; or may be various terminals comprising one of the above memories or any combination thereof, such as mobile phones, computers, tablet devices, personal digital assistants, etc.

It should be pointed out that the description above is merely an example and does not restrict the present invention.

The technical solution of the present invention essentially, i.e. the part thereof that makes a contribution to the prior art, or all or part of the technical solution, may be embodied in the form of a software product, the computer software product being stored in a storage medium, and comprising instructions for causing a computer device (which may be a personal computer, a server or a network device, etc.) or a processor or microcontroller to execute all or some of the steps of the method described in the various embodiments of the present invention.

Those skilled in the art will understand that all or some of the steps in the method embodiments described above may be realized by means hardware associated with program instructions. The abovementioned program may be stored in a computer-readable storage medium. When the program is executed, the execution comprises steps of the method embodiments described above.

Although the present invention has been disclosed above with preferred embodiments, the present invention is not limited to this. Any change or modification made by those skilled in the art without departing from the scope of the present invention should be included in the scope of protection thereof. Thus, the scope of protection of the present invention shall be the scope defined by the claims.

## Claims

1. A method for processing data in a time-sensitive network, the data being time-sensitive data, wherein the method comprises:
acquiring a first time, a second time and a third time;
determining whether the data enters a sending queue abnormally by determining whether the data entered at a time that causes it to be scheduled outside its designated gate control operation and based on the first time, the second time and the third time acquired;
if the data is determined to have entered the sending queue abnormally, telling a sender of the data to adjust a sending time,
wherein the first time is a time when the data is actually scheduled for transmission, the second time is a time when the gate control operation of the data is planned to begin, and the third time is a duration of the gate control operation of the data.

2. The processing method as claimed in claim 1, wherein, when the difference between the first time and the second time is greater than the third time, or when the difference between the first time and the second time is less than 0, the data enters a sending queue abnormally.

3. The processing method as claimed in claim 1, wherein the sender of the data is told to adjust the sending time on the basis of a delay value of the data, wherein the delay value is computed as a difference between the first time and a fourth time, the fourth time being a time when the data is planned to be scheduled for transmission according to a gate control operation.

4. The processing method as claimed in claim 3, wherein a delay value of data is computed multiple times, and a smoothing algorithm is used to subject multiple computed delay values to smoothing, so as to obtain a final delay value, and the sender is told to adjust the sending time on the basis of the final delay value.

5. The method as claimed in claim 1, wherein the method further comprises: identifying whether the data is time-sensitive data, and upon identifying that the data is time-sensitive data, putting the data into a sending queue having a highest priority.

6. The method as claimed in claim 1, wherein the method further comprises: identifying whether an abnormal flow processing function is activated, and when it is activated, performing the step of identifying whether the data enters a sending queue abnormally.

7. The method as claimed in claim 6, wherein a value of a function register is used to indicate activation or deactivation of the abnormal flow processing function.

8. An apparatus configured to perform the method of claim 1.

9. A computer-readable storage medium, having a computer program stored thereon, the computer program comprising an executable instruction, wherein, when the executable instruction is executed by a processor, the processing method as claimed in any one of claims 1 - 7 is implemented.

## Patentansprüche

1. Verfahren zum Verarbeiten von Daten in einem zeitkritischen Netzwerk, wobei die Daten zeitkritische Daten sind, wobei das Verfahren umfasst:
Erfassen eines ersten Zeitpunkts, eines zweiten Zeitpunkts und eines dritten Zeitpunkts;
Bestimmen, ob die Daten anormal in eine Sendewarteschlange eintreten, durch Bestimmen, ob die Daten zu einem Zeitpunkt eingetreten sind, der bewirkt, dass sie außerhalb ihres zugewiesenen Torsteuerungsvorgangs eingeplant werden, und basierend auf dem erfassten ersten Zeitpunkt, dem erfassten zweiten Zeitpunkt und dem erfassten dritten Zeitpunkt;
falls bestimmt wird, dass die Daten anormal in die Sendewarteschlange eingetreten sind, Mitteilen an einen Sender der Daten, eine Sendezeit anzupassen,
wobei der erste Zeitpunkt ein Zeitpunkt ist, zu dem die Daten tatsächlich zur Übertragung eingeplant sind, der zweite Zeitpunkt ein Zeitpunkt ist, zu dem der Torsteuerungsvorgang der Daten planmäßig beginnen soll, und der dritte Zeitpunkt eine Zeitdauer des Torsteuerungsvorgangs der Daten ist.

2. Verarbeitungsverfahren nach Anspruch 1, wobei, wenn die Differenz zwischen dem ersten Zeitpunkt und dem zweiten Zeitpunkt größer als der dritte Zeitpunkt ist, oder wenn die Differenz zwischen dem ersten Zeitpunkt und dem zweiten Zeitpunkt kleiner als 0 ist, die Daten anormal in eine Sendewarteschlange eintreten.

3. Verarbeitungsverfahren nach Anspruch 1, wobei dem Sender der Daten mitgeteilt wird, die Sendezeit auf der Grundlage eines Verzögerungswerts der Daten anzupassen, wobei der Verzögerungswert als eine Differenz zwischen dem ersten Zeitpunkt und einem vierten Zeitpunkt berechnet wird, wobei der vierte Zeitpunkt ein Zeitpunkt ist, zu dem die Daten planmäßig gemäß einem Torsteuerungsvorgang zur Übertragung eingeplant werden sollen.

4. Verarbeitungsverfahren nach Anspruch 3, wobei ein Verzögerungswert von Daten mehrfach berechnet wird und ein Glättungsalgorithmus verwendet wird, um mehrere berechnete Verzögerungswerte einem Glätten zu unterziehen, um so einen endgültigen Verzögerungswert zu erhalten, und dem Sender mitgeteilt wird, die Sendezeit auf der Grundlage des endgültigen Verzögerungswerts anzupassen.

5. Verfahren nach Anspruch 1, wobei das Verfahren ferner umfasst: Identifizieren, ob die Daten zeitkritische Daten sind, und bei Identifizieren, dass die Daten zeitkritische Daten sind, Einreihen der Daten in eine Sendewarteschlange, die eine höchste Priorität aufweist.

6. Verfahren nach Anspruch 1, wobei das Verfahren ferner umfasst: Identifizieren, ob eine Verarbeitungsfunktion für anormalen Fluss aktiviert ist, und wenn sie aktiviert ist, Durchführen des Schritts des Identifizierens, ob die Daten anormal in eine Sendewarteschlange eintreten.

7. Verfahren nach Anspruch 6, wobei ein Wert eines Funktionsregisters verwendet wird, um Aktivierung oder Deaktivierung der Verarbeitungsfunktion für anormalen Fluss anzuzeigen.

8. Einrichtung, die konfiguriert ist, das Verfahren nach Anspruch 1 durchzuführen.

9. Computerlesbares Speichermedium, das ein darauf gespeichertes Computerprogramm aufweist, wobei das Computerprogramm einen ausführbaren Befehl umfasst, wobei, wenn der ausführbare Befehl durch einen Prozessor ausgeführt wird, das Verarbeitungsverfahren nach einem der Ansprüche 1 - 7 implementiert wird.

## Revendications

1. Procédé de traitement de données dans un réseau sensible au temps, les données étant des données sensibles au temps, dans lequel le procédé comprend :
l'acquisition d'un premier instant, d'un deuxième instant et d'un troisième instant ;
le fait de déterminer si les données entrent anormalement dans une file d'attente d'émission en déterminant si les données saisies à un instant qui entraîne leur planification en dehors de l'opération de commande de porte qui leur est attribuée et sur la base du premier instant, du deuxième instant et du troisième instant obtenus ;
s'il est déterminé que les données sont entrées de façon anormale dans la file d'attente d'émission, le fait de demander à un émetteur des données d'ajuster un instant d'émission,
dans lequel le premier instant est un instant où les données sont effectivement planifiées pour transmission, le deuxième instant est un instant où l'opération de commande de porte des données est prévue pour commencer, et le troisième instant est une durée de l'opération de commande de porte des données.

2. Procédé de traitement selon la revendication 1, dans lequel, lorsque la différence entre le premier instant et le deuxième instant est supérieure au troisième instant, ou lorsque la différence entre le premier instant et le deuxième instant est inférieure à 0, les données entrent anormalement dans une file d'attente d'émission.

3. Procédé de traitement selon la revendication 1, dans lequel il est demandé à l'émetteur des données d'ajuster l'instant d'émission sur la base d'une valeur de retard des données, dans lequel la valeur de retard est calculée comme une différence entre le premier instant et un quatrième instant, le quatrième instant étant un instant où il est prévu de planifier la transmission des données selon une opération de commande de porte.

4. Procédé de traitement selon la revendication 3, dans lequel une valeur de retard des données est calculée plusieurs fois, et un algorithme de lissage est utilisé pour soumettre plusieurs valeurs de retard calculées à un lissage, de manière à obtenir une valeur de retard finale, et il est demandé à l'émetteur d'ajuster l'instant d'émission sur la base de la valeur de retard finale.

5. Procédé selon la revendication 1, dans lequel le procédé comprend en outre : le fait d'identifier si les données sont des données sensibles au temps, et lorsqu'il est identifié que les données sont des données sensibles au temps, le placement des données dans une file d'attente d'émission ayant la priorité la plus élevée.

6. Procédé selon la revendication 1, dans lequel le procédé comprend en outre : le fait d'identifier si une fonction de traitement de flux anormal est activée et, lorsqu'elle est activée, la réalisation de l'étape qui consiste à identifier si les données entrent anormalement dans une file d'attente d'émission.

7. Procédé selon la revendication 6, dans lequel la valeur d'un registre de fonction est utilisée pour indiquer l'activation ou la désactivation de la fonction de traitement de flux anormal.

8. Appareil configuré pour réaliser le procédé selon la revendication 1.

9. Support de stockage lisible par ordinateur, sur lequel est stocké un programme informatique, le programme informatique comprenant une instruction exécutable, dans lequel, lorsque l'instruction exécutable est exécutée par un processeur, le procédé de traitement selon l'une quelconque des revendications 1 à 7 est mis en œuvre.
